# EUROPÄISCHE PATENTSCHRIFT

(11) **EP 1 698 447 B1**
(45) Veröffentlichungstag und Bekanntmachung des Hinweises auf die Patenterteilung: **20.05.2009**
(21) Anmeldenummer: 06110061.6
(22) Anmeldetag: 16.02.2006
(51) Int. Cl.: B29C 70/68, B29C 41/20, B29C 45/14, B29C 51/12

(54) **Verwendung einer Folienanordnung und Folienanordnung**
Film assembly and its use.
Assemblage de film et son utilisation

(30) Priorität: 03.03.2005 DE 102005010371
(43) Veröffentlichungstag der Anmeldung: 06.09.2006
(73) Patentinhaber: Huhtamaki Forchheim Zweigniederlassung der Huhtamaki Deutschland GmbH & Co. KG, 91301 Forchheim (DE)
(72) Erfinder: Markert, Wolfgang, 91301, Forchheim (DE); Gerolymos, Eleftherios, Forchheim 91301 (DE)
(74) Vertreter: Hutzelmann, Gerhard

(56) Entgegenhaltungen:
- EP-A- 0 385 887
- EP-A- 1 493 786
- EP-A- 1 553 544
- WO-A-03/106134
- US-A1- 2004 115 389
- US-A1- 2004 238 623
- US-A1- 2005 058 809
- DATABASE WPI Section Ch, Week 200003 Derwent Publications Ltd., London, GB; Class A18, AN 2000-032431 XP002388206 -& JP 11 300910 A (CHISSO CORP) 2. November 1999 (1999-11-02)

## Beschreibung

Die Erfindung bezieht sich auf eine Folienanordnung und die Verwendung dieser Folienanordnung für das In-Mould-Labeling.

Es sind verschiedene Verfahren bekannt, Kunststoff-Gegenstände mit einem Etikett zu versehen. Hierbei werden entweder nachträglich Etiketten angebracht, oder aber sie werden zusammen mit einem Tiefziehkörper tiefgezogen. Hierzu sind verschiedene Folienanordnungen bekannt.

Aus der EP 0 385 887 A1 ist beispielsweise eine Folienanordnung bekannt, die für das In-Mould-Labeling geeignet ist. Die dort beschriebene Folienanordnung kann zu dekorativen Zwecken auch der Aussenseite geprägt sein.

Aufgabe der Erfindung ist es, eine Folienanordnung und deren Verwendung vorzuschlagen, bei der eine reproduzierbare und genaue Positionierung eines Etiketts oder dergleichen ermöglicht wird und zudem eine innige Verbindung zwischen dem Etikett und dem Formkörper sichergestellt ist, ohne daß eine Beeinträchtigung der Folienanordnung durch die beim Zusammenfügen des Labels mit dem Behälter auftretende Wärme beim Spritzen, Gießen oder Tiefziehen eines aus einem thermoplastischen Material gefertigten Körpers erfolgt.
Diese Aufgabe wird erfindungsgemäß dadurch gelöst, daß die äußere Oberfläche der Folienanordnung geprägt ist, die Anordnung aus wenigstens zwei Schichten aufgebaut ist und zwischen den Schichten ein Druckbild vorgesehen ist.

Durch die Prägung ergibt sich eine unempfindliche Oberfläche.Unterschiedliche Eigenschaften der beiden Schichten können genutzt werden. So ist es möglich, daß die innere Schicht sich mit dem Formkörper zu verbinden vermag, wohingegen die äußere Schicht beispielsweise besonders kratzfest ist.
Das zwischen den Folienschichten angeordnete Druckbild ist dauerhaft und gegen Beschädigungen geschützt.

Es hat sich auch als sehr vorteilhaft erwiesen, wenn die Schichten als loser Verbund zusammengefügt sind.

Ebenfalls sehr vorteilhaft ist es, wenn die Schichten punktuell, linienförmig od. dgl. zusammengefügt sind.

Dabei hat es sich als äußerst vorteilhaft erwiesen, wenn ein Luftpolster zwischen den Schichten vorgesehen ist.

Durch diese Ausgestaltungen kann wenigstens ein Teil des insbesondere beim Spritzgießen auftretenden Drucks gleichmässig verteilt werden. Zudem wird ein Einwirken der beim Formen auftretenden hohen Temperaturen auf die Außenfolie vermieden. Eine Beeinträchtigung der Außenfolie, insbesondere einer angebrachten Prägung findet nicht statt.

Eine weitere sehr vorteilhafte Ausgestaltung der Erfindung ist auch darin zu sehen, zwischen den Schichten eine elastische Zwischenlage vorgesehen ist.

Die elastische Zwischenlage verhindert ebenfalls daß Druckspitzen und/oder hohe Temperaturen auf die Außenfolie einwirken.

Eine weitere erfindungsgemäß sehr vorteilhafte Ausgestaltung der Erfindung liegt auch darin, daß zwischen den Schichten ein Kaschierkleber vorgesehen ist.

Der Kaschierkleber stellt einerseits eine sichere Verbindung zwischen den einzelnen Lagen her und vermeidet andererseits ebenfalls eine Beschädigung der Außenfolie beim Formen des Formkörpers.

Es hat sich auch als sehr vorteilhaft erwiesen, wenn wenigstens eine der Schichten eine hohe Elastizität aufweist.

Erfindungsgemäß ist es auch sehr vorteilhaft, wenn wenigstens eine der Schichten gute optische Eigenschaften aufweist.

Hierdurch lässt sich das unter dieser Schicht liegende Druckbild besonders gut erkennen.

Eine äußerst vorteilhafte Ausgestaltung der Erfindung liegt auch darin, daß eine auf das Druckbild folgende Folie wenigstens einseitig geprägt ausgebildet ist.

Dabei ist es sehr vorteilhaft, wenn die Prägung auf der dem Druckbild abgewandten Seite vorgesehen ist.

Die Prägung, insbesondere auf der dem Druckbild abgewandten Seite vermindert Reflexionen, die beim Betrachten des Druckbildes auftreten können.

Eine weitere sehr vorteilhafte Ausgestaltung der Erfindung liegt auch darin, daß das Druckbild auf einer Trägerfolie angeordnet ist.

Das Druckbild lässt sich so auf einfache Art und Weise auf die Trägerfolie aufbringen. Erst anschließend wird die Trägerfolie mit den restlichen Schichten zusammengefügt.

Erfindungsgemäß ist es sehr vorteilhaft, wenn die Trägerfolie eine Dicke von 20 bis 400µm, vorzugsweise eine Dicke von annähernd 200µm aufweist.

Bei dieser Dicke vermag die Trägerfolie nicht nur das Druckbild aufzunehmen, sondern auch die Deckfolie vor schädlichen Einwirkungen beim Spritzgießen, Tiefziehen od. dgl. zu schützen.

Als sehr vorteilhaft hat es sich auch erwiesen, wenn die auf das Druckbild folgende Folie eine Dicke von 5 bis 400µm, vorzugsweise eine Dicke von annähernd 80µm aufweist.

Eine Folie dieser Abmessungen vermag das Druckbild sehr gut zu schützen.

Eine weitere sehr vorteilhafte Ausgestaltung der Erfindung ist auch darin zu sehen, daß die Folienschichten eine Schmelztemperatur aufweisen, die höher als diejenige des zu formenden Gegenstandes ist.

Hierdurch wird zumindest ein vollständiges Schmelzen der Folienschichten vermieden.

Als sehr vorteilhaft hat es sich erwiesen, wenn wenigstens eine der Folienschichten aus OPP hergestellt ist.

Ebenfalls sehr vorteilhaft ist es, wenn wenigstens eine der Folienschichten gereckt ist.

Dabei ist es äußerst vorteilhaft, wenn wenigstens eine der Folienschichten simultan biaxial gereckt ist.

Hierdurch werden besonders gute Ergebnisse bei der Verwendung der Folienanordnung erzielt.

Eine ebenfalls sehr vorteilhafte Ausgestaltung der Erfindung liegt auch darin, daß die Form im Bereich der Folienanordnung gekühlt wird.

Damit werden die thermischen Belastungen der Folienanordnung erheblich vermindert. Ein versehentliches Schmelzen der Folienanordnung wird vermieden.

Im folgenden wird die Erfindung anhand eines Ausführungsbeispiels veranschaulicht.

Gemäß einem Ausführungsbeispiel der Erfindung wird eine Folienanordnung in eine Spritzgußform derart eingelegt, daß diese an einer Wandung der Form anliegt.
Anschließend wird der flüssige Kunststoff unter Druck in die Form eingespritzt. Der Kunststoff und die Folienanordnung verbinden sich dabei miteinander, da zumindest die innere Folienschicht wenigstens teilweise angeschmolzen wird. Die äußere Folienschicht wird dagegen durch die innere Folienschicht geschützt.

Zwischen den Folienschichten ist ein Druckbild angebracht, welches durch die äußere Folienschicht abgedeckt und geschützt wird. Um Reflexionen zu vermeiden, ist die dem Druckbild abgekehrte Seite der äußeren Folienschicht geprägt.

Die Prägung wird während des Spritzgußvorganges nur elastisch verformt, wodurch nach Entnahme des Körpers die ursprüngliche Prägung nach außen tritt. Trotz Prägung lässt sich ein sauberes Druckbild auf einer glatten Fläche anbringen. Die Vorteile einer Prägung werden mit den Vorteilen eines Druckes auf glatter Fläche zusammengeführt.

Die beiden Folien-Schichten können in einem losen Verbund miteinander zusammengefügt sein. Es ist aber auch denkbar, daß eine gezielte punktuelle, streifenförmige oder ähnliche Verbindung zwischen den Folienschichten vorgesehen ist. Zwischen den Folienschichten kann ein Luftpolster, eine elastische Zwischenlage oder ein Kaschierkleber angeordnet sein. Alle diese Ausgestaltungsmöglichkeiten sorgen dafür, daß punktuelle Spitzendrücke beim Herstellen des Körpers auf die Folienanordnung vermieden werden. Zudem stellen diese Schichten gleichzeitig eine Wärmeisolation dar, wodurch ein starkes Aufheizen der äußeren Folienschicht vermieden wird.

Wenigstens ein Teil der Folienschichten kann aus ungereckten oder gereckten Thermoplasten wie PP, PE, PA oder dergleichen hergestellt werden. Es ist aber auch denkbar, daß biaxial gereckte Folienlagen für die Folienanordnung verwendet werden. Speziell hat es sich als sehr vorteilhaft herausgestellt, wenn OPP zum Einsatz kommt.

Gemäß einer weiteren Ausgestaltung der Erfindung ist es auch denkbar, daß mehrere Prägungen auf verschiedenen Folienschichten und auf verschiedenen Seiten vorgesehen sind. Es ist desweiteren denkbar, daß wenigstens ein Teil der eingesetzten Folienschichten einen höheren Schmelzpunkt als das bei der Formgebung eingesetzte Material aufweist, wodurch die Möglichkeiten einer Deformation der Folienanordnung verringert werden. Allerdings wird dann die Folienanordnung nicht mehr mit dem zu formenden Gegenstand verschmolzen, sondern nur noch mit diesem verklebt.

Es ist auch denkbar, daß die Folienanordnung nicht nur bei der Spritzgußherstellung, sondern bei jeglicher Formgebung eines insbesondere thermoplastischen Materials zur Anwendung kommt.

## Patentansprüche

1. Folienanordnung zur Verwendung für das In-Mould-Labeling, wobei die Folienanordnung derart ausgebildet ist, daß diese vor dem Spritzen, Gießen oder Tiefziehen eines aus einem thermoplastischen Material gefertigten Körper in die Form des Körpers eingelegt werden kann, **dadurch gekennzeichnet, daß** die äußere Oberfläche der Folienanordnung geprägt ist, die Anordnung aus wenigstens zwei Schichten aufgebaut ist und daß zwischen den Schichten ein Druckbild vorgesehen ist.

2. Folienanordnung nach Anspruch 1, **dadurch gekennzeichnet, daß** die Schichten als loser Verbund zusammengefügt sind.

3. Folienanordnung nach Anspruch 2, **dadurch gekennzeichnet, daß** die Schichten punktuell, linienförmig od. dgl. zusammengefügt sind.

4. Folienanordnung nach Anspruch 2 oder 3, **dadurch gekennzeichnet, daß** ein Luftpolster zwischen den Schichten vorgesehen ist.

5. Folienanordnung nach einem der Ansprüche 1 bis 4, **dadurch gekennzeichnet, daß** zwischen den Schichten eine elastische Zwischenlage vorgesehen ist.

6. Folienanordnung nach einem der Ansprüche 1 bis 5, **dadurch gekennzeichnet, daß** zwischen den Schichten ein Kaschierkleber vorgesehen ist.

7. Folienanordnung nach einem der Ansprüche 1 bis 6, **dadurch gekennzeichnet, daß** wenigstens eine der Schichten eine hohe Elastizität aufweist.

8. Folienanordnung nach einem der Ansprüche 1 bis 7, **dadurch gekennzeichnet, daß** wenigstens eine der Schichten gute optische Eigenschaften aufweist.

9. Folienanordnung nach einem der Ansprüche 1 bis 8, **dadurch gekennzeichnet, daß** eine auf das Druckbild folgende Folie wenigstens einseitig geprägt ausgebildet ist.

10. Folienanordnung nach Anspruch 9, **dadurch gekennzeichnet, daß** die Prägung auf der dem Druckbild abgewandten Seite vorgesehen ist.

11. Folienanordnung nach einem der Ansprüche 1 bis 10, **dadurch gekennzeichnet, daß** das Druckbild auf einer Trägerfolie angeordnet ist.

12. Folienanordnung nach Anspruch 11, **dadurch gekennzeichnet, daß** die Trägerfolie eine Dicke von 20 bis 400µm, vorzugsweise eine Dicke von annähernd 200µm aufweist.

13. Folienanordnung nach einem der Ansprüche 1 bis 12, **dadurch gekennzeichnet, daß** die auf das Druckbild folgende Folie eine Dicke von 5 bis 400µm, vorzugsweise eine Dicke von annähernd 80µm aufweist.

14. Folienanordnung nach einem der Ansprüche 1 bis 13, **dadurch gekennzeichnet, daß** die Folienschichten eine Schmelztemperatur aufweisen, die höher als diejenige des zu formenden Gegenstandes ist.

15. Folienanordnung nach einem der Ansprüche 1 bis 14, **dadurch gekennzeichnet, daß** wenigstens eine der Folienschichten aus OPP hergestellt ist.

16. Folienanordnung nach einem der Ansprüche 1 bis 15, **dadurch gekennzeichnet, daß** wenigstens eine der Folienschichten gereckt ist.

17. Folienanordnung nach Anspruch 16, **dadurch gekennzeichnet, daß** wenigstens eine der Folienschichten simultan biaxial gereckt ist.

18. Verfahren zum Einbringen einer Folienanordnung gemäß einem der Ansprüche 1 bis 17 in einem In-Mould-Labeling-Verfahren, wobei die Folienanordnung dearart ausgebildet ist, daß diese vor dem Spritzen, Gießen oder Tiefziehen eines aus einem thermoplastischen Material gefertigten Körper in die Form des Körpers eingelegt werden kann, **dadurch gekennzeichnet daß** die Form im Bereich der Folienanordnung gekühlt wird.

## Claims

1. Film arrangement for use for in-mould labelling, wherein the film arrangement is constructed in such a manner that prior to injection-moulding, casting or deep-drawing of a body made from a thermoplastic material this film arrangement can be placed in the mould of the body, **characterised in that** the outer surface of the film arrangement is stamped, the arrangement is constructed from at least two layers and that a printed image is provided between the layers.

2. Film arrangement according to claim 1, **characterised in that** the layers are combined as a loose composite.

3. Film arrangement according to claim 2, **characterised in that** the layers are joined together punctiformly, linearly or the like.

4. Film arrangement according to claim 2 or 3, **characterised in that** an air cushion is provided between the layers.

5. Film arrangement according to any one of claims 1 to 4, **characterised in that** a resilient intermediate layer is provided between the layers.

6. Film arrangement according to any one of claims 1 to 5, **characterised in that** a laminating adhesive is provided between the layers.

7. Film arrangement according to any one of claims 1 to 6, **characterised in that** at least one of the layers has a high level of elasticity.

8. Film arrangement according to any one of claims 1 to 7, **characterised in that** at least one of the layers has good optical characteristics.

9. Film arrangement according to any one of claims 1 to 8, **characterised in that** a film following the printed image is formed to be stamped at at least one side.

10. Film arrangement according to claim 9, **characterised in that** the stamping is provided on the side remote from the printed image.

11. Film arrangement according to any one of claims 1 to 10, **characterised in that** the printed image is arranged on a carrier film.

12. Film arrangement according to claim 11, **characterised in that** the carrier film has a thickness of 20 to 400 microns, preferably a thickness of approximately 200 microns.

13. Film arrangement according to any one of claims 1 to 12, **characterised in that** the film following the printed image has a thickness of 5 to 400 microns, preferably a thickness of approximately 80 microns.

14. Film arrangement according to any one of claims 1 to 13, **characterised in that** the film layers have a melting temperature higher than that of the article to be moulded.

15. Film arrangement according to any one of claims 1 to 14, **characterised in that** at least one of the film layers is made of OPP.

16. Film arrangement according to any one of claims 1 to 15, **characterised in that** at least one of the film layers is oriented.

17. Film arrangement according to claim 16, **characterised in that** at least one of the film layers is simultaneously biaxially stretched.

18. Method of introducing a film arrangement according to any one of claims 1 to 17 into an in-mould labelling method, wherein the film arrangement is constructed in such a manner that prior to injection-moulding, casting or deep-drawing of a body made of a thermoplastics material the arrangement can be placed in the mould of the body, **characterised in that** the mould is cooled in the region of the film arrangement.

## Revendications

1. Ensemble ou agencement de films à utiliser pour l'étiquetage au moulage (« in-mold labeling »), sachant que l'ensemble de films est réalisé de telle sorte qu'il peut être inséré dans le moule d'un corps fabriqué à partir d'un matériau thermoplastique avant la fabrication de ce corps par injection, par coulée ou par thermoformage profond, **caractérisé en ce que** la surface extérieure de l'ensemble ou l'agencement de films est gaufrée, **en ce que** l'ensemble ou l'agencement est constitué d'au moins deux couches, et **en ce qu'**une image imprimée est prévue entre les couches.

2. Ensemble de films selon la revendication 1, **caractérisé en ce que** les couches sont assemblées sous la forme d'un assemblage lâche.

3. Ensemble de films selon la revendication 2, **caractérisé en ce que** les couches sont assemblées de manière ponctuelle, linéaire ou analogue.

4. Ensemble de films selon la revendication 2 ou 3, **caractérisé en ce qu'**un coussin d'air est prévu entre les couches.

5. Ensemble de films selon l'une des revendications 1 à 4, **caractérisé en ce qu'**une strate intermédiaire élastique est prévue entre les couches.

6. Ensemble de films selon l'une des revendications 1 à 5, **caractérisé en ce qu'**un adhésif à contrecoller est prévu entre les couches.

7. Ensemble de films selon l'une des revendications 1 à 6, **caractérisé en ce qu'**au moins une des couches présente une élasticité élevée.

8. Ensemble de films selon l'une des revendications 1 à 7, **caractérisé en ce qu'**au moins une des couches présente de bonnes propriétés optiques.

9. Ensemble de films selon l'une des revendications 1 à 8, **caractérisé en ce qu'**un film faisant suite à l'image imprimée est réalisé gaufré au moins sur une face.

10. Ensemble de films selon la revendication 9, **caractérisé en ce que** le gaufrage est prévu sur la face opposée à l'image imprimée.

11. Ensemble de films selon l'une des revendications 1 à 10, **caractérisé en ce que** l'image imprimée est disposée sur un film de support.

12. Ensemble de films selon la revendication 11, **caractérisé en ce que** le film de support présente une épaisseur de 20 à 400 µm, de préférence une épaisseur d'environ 200 µm.

13. Ensemble de films selon l'une des revendications 1 à 12, **caractérisé en ce que** le film faisant suite à l'image imprimée présente une épaisseur de 5 à 400 µm, de préférence une épaisseur d'environ 80 µm.

14. Ensemble de films selon l'une des revendications 1 à 13, **caractérisé en ce que** les couches de film présentent une température de fusion qui est supérieure à celle de l'objet à mouler.

15. Ensemble de films selon l'une des revendications 1 à 14, **caractérisé en ce qu'**au moins une des couches de film est fabriquée en film de polypropylène orienté (PPO).

16. Ensemble de films selon l'une des revendications 1 à 15, **caractérisé en ce qu'**au moins une des couches de film est étirée.

17. Ensemble de films selon la revendication 16, **caractérisé en ce qu'**au moins une des couches de film est soumise à un étirage biaxial simultané.

18. Procédé de mise en place d'un ensemble ou d'un agencement de films selon l'une des revendications 1 à 17 dans un procédé d'étiquetage au moulage (« in-mold labeling »), sachant que l'ensemble ou l'agencement de films est réalisé de telle sorte qu'il peut être inséré dans le moule d'un corps fabriqué à partir d'un matériau thermoplastique avant la fabrication de ce corps par injection, par coulée ou par thermoformage profond, **caractérisé en ce que** le moule est refroidi dans la région de l'ensemble de films.
